Europäisches Patentamt

**European Patent Office**

**Office européen des brevets**

(11) Publication number: **0 028 086**
**A1**

(12) # EUROPEAN PATENT APPLICATION

(21) Application number: **80303593.0**

(51) Int. Cl.³: **B 65 G 53/28**

(22) Date of filing: **10.10.80**

(30) Priority: **29.10.79 GB 7937439**

(43) Date of publication of application: **06.05.81**
**Bulletin 81/18**

(84) Designated Contracting States: **AT BE CH DE FR GB IT LI LU NL SE**

(71) Applicant: **SYKES CONSTRUCTION SERVICES LIMITED, Edinburgh Avenue, Slough Berks.SL1 4TH (GB)**

(72) Inventor: **Brain, Philip Laurence, Garden House Brocastle Bridgend, Mid Glamorgan Wales (GB)**
Inventor: **Young, David William Norman, Corner Farm, North Anston Sheffield, S3 17BE (GB)**

(74) Representative: **Dixon, Donald Cossar, Gee & Co. Chancery House Chancery Lane, London WC2 1QU (GB)**

(54) **Material transporting apparatus.**

(57)     The apparatus is primarily intended for use in the clearing of digestion tanks (30-32) of sewage treatment plants.

The apparatus comprises a reception and discharge chamber (10), an inlet controlled by a valve (15) and which opens to the upper part (11) of the chamber from a material collector conduit (14), a material discharge conduit (17) which opens from the bottom part (12) of the chamber, a valve (18) to control flow through the discharge conduit, and means (19,23,21) for alternately reducing the pressure within the chamber to draw material into the chamber through said collector conduit and increasing the pressure within the chamber to expel material from the chamber through said discharge conduit.

Said means (19,23,21) may comprise a suction pipe (23) which opens from the upper part of the chamber, and a blow line (21) which feeds nozzles (22) which direct air flows into the chamber in a generally tangential manner to produce a downwardly swirling flow of the contents of the chamber.

- 1 -

## MATERIAL TRANSPORTING APPARATUS

This invention relates to a material transporting apparatus which is particularly applicable to the collection and positive placement of discrete solids, sludges and liquids.

It is one object of the present invention to provide a mobile but versatile apparatus for transporting material such as the residual contents of primary digestion tanks in sewage treating plants. It is well known that such digestion tanks can become very restricted in effective capacity due to the accumulation of more-or-less solidified grit on the tank walls where they converge downwardly towards the base opening, and to the formation on the surface of the liquid in the tank of a thick fibrous layer which includes floating rubbish such as plastic bags, and most of which may remain in the tank after draining off the liquid and part of the sludge which is also present. It is also well known that the removal of these contaminating materials from a drained tank, which is substantially enclosed and contains noxious and explosive gases, is an expensive and unpleasant manual process. It is also difficult to remove the contaminating materials mechanically, due to their inaccessibility within the tank, and this presents a particular problem in the case of grit which can become compacted and must be dislodged before it can be removed; a further disadvantage in known methods of removing compacted grit is that they usually involve the addition of water in such quantities as to add significantly to the total volume to be removed from the tank.

The present invention aims, inter alia, to minimise the difficulties involved in the clearing of digestion tanks, and the apparatus according to the present invention comprises a reception and discharge chamber, a valve-controlled inlet which opens to the upper part of the chamber from a material collector conduit, an outlet which opens from the bottom part of the chamber to a material discharge conduit, valve means to control flow through the discharge conduit, and means for alternately reducing the pressure within the chamber to draw material into the chamber through said collector conduit and increasing the pressure within the chamber to expel material from the chamber through said discharge conduit.

Preferably, said means comprises a suction pipe which opens from the upper part of the chamber, and a blow line which is arranged to pressurise the chamber to expel said material. Said blow line may feed nozzles which direct air flows into the chamber in a generally tangential manner to produce a downwardly swirling flow of the contents of the chamber.

Embodiments of the invention will now be described, by way of example, with reference to the accompanying diagrammatic drawings in which:

Figure 1 is a side elevation showing one form of apparatus according to the invention, for the collection and positive placement of contaminating material from a digestion tank;

Figure 2 is a general view showing a digestion tank to be cleared by an apparatus as shown in Figure 1;

Figure 3 is a side elevation showing a modified form of the apparatus according to the invention;

Figure 4 is a fragementary view showing an alternative form of the apparatus according to the invention;

Figure 5 is a detail view showing an outlet valve for the collection and discharge chamber of the apparatus;

Figure 6 is a detail view showing a discharge pump;

Figure 7 is a detail view showing the chamber of an apparatus according to the invention for handling fine particulate material; and,

Figure 8 is a detail view showing an alternative form of collection and discharge chamber.

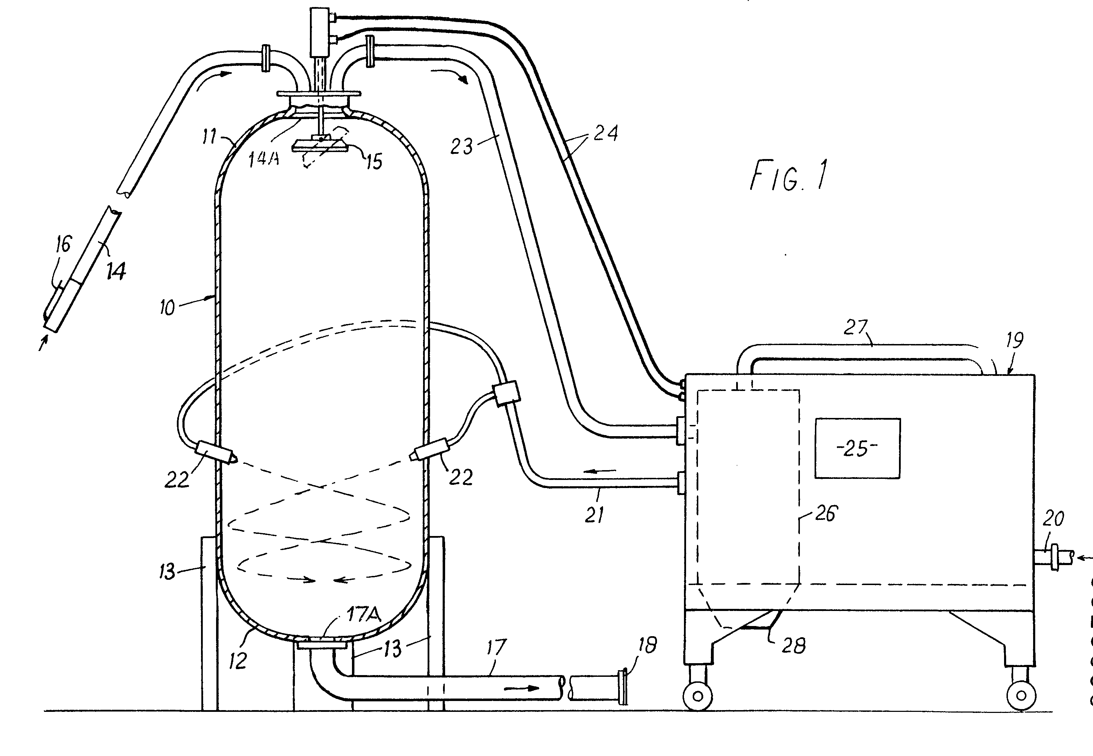

Referring to Figure 1 of the drawings, the apparatus comprises a reception and discharge chamber 10 for materials such as grit, fatty liquid, and rubbish such as plastic bags, from digestion tanks in sewage treating plants. The chamber is a steel cylinder having hemispherical ends 11 and 12 and carried by a suitable stand 13. A material recovery or collector hose 14 opens nearly centrally at 14A into the top end 11 of the chamber under the control of a hinged-plate valve 15. The inlet end of the flexible hose 14 is provided with a density control tube 16 as hereinafter described.

A material delivery hose 17 opens at 17A from the bottom end 12 of the chamber, and this flexible hose is provided with a non-return valve such as a flap valve 18 at its outlet end.

The apparatus also includes a mobile power pack 19 fed through connection 20 from a mobile compressor (not shown). As an alternative to the compressor supply, the pack may have a powered vacuum source such as a liquid ring pump.

An air line 21 from the compressor feeds a pair of nozzles 22 which are arranged to inject air into the chamber in a downward and gene ally tangential direction. A suction pipe 23 from the power pack opens from the top end 11 of the chamber 10, the suction being derived from an entrainment pump (not shown) in the pack. The suction pipe 23 is also controlled by the valve 15 which is operated pneumatically, through control pipes 24, from the power pack which has a timer control panel 25. The pack is also provided with a tank 26 having a carryover pipe 27, to intercept and collect any material which might be drawn into the suction pipe 23; such collected material can be removed periodically, for example, during discharge of material from the chamber 10.

In use of the apparatus, the sequence of operations now described is follwed:-

a) With the valve 15 held open, air is extracted through suction pipe 23 to reduce the pressure in the chamber 10, and thus cause material to be sucked and pneumatically transported into the chamber through the recovery hose 14; the valve plate may pivot as shown in dot-dash lines, to promote unobstructed entry of material. This operation continues for a predetermined time of, say, 1 to 10 minutes, as set on the control panel 25; alternatively, the stand 13 may incorporate weight sensors in the form of springs or electric load cells, to terminate the filling operation when a predetermined weight of material has been collected. During the filling operation, the flap valve 18 closes automatically due to the reduced pressure in the delivery hose 17.

b) On the termination of the filling operation, the suction is cut off and, after a delay of, say, 10 seconds, the valve 15 is closed. After a further delay of, say, 10 seconds, compressed air is fed to the nozzles 22 to start the delivery operation.

c) The air jets from the nozzles 22 pressurise the chamber 10 to expel the collected material through delivery hose 17, the falp valve 18 opening automatically. The angling of the nozzles causes the exiting material to swirl downwardly, as shown in broken lines in Figure 1, and so produce a scouring action and promote complete and uninterrupted emptying of the chamber.

d) After a predetermined time of, say, $\frac{1}{2}$ to 10 minutes, or as indicated by weight sensors, the chamber should be substantially empty of material and the sequence of operations restarts.

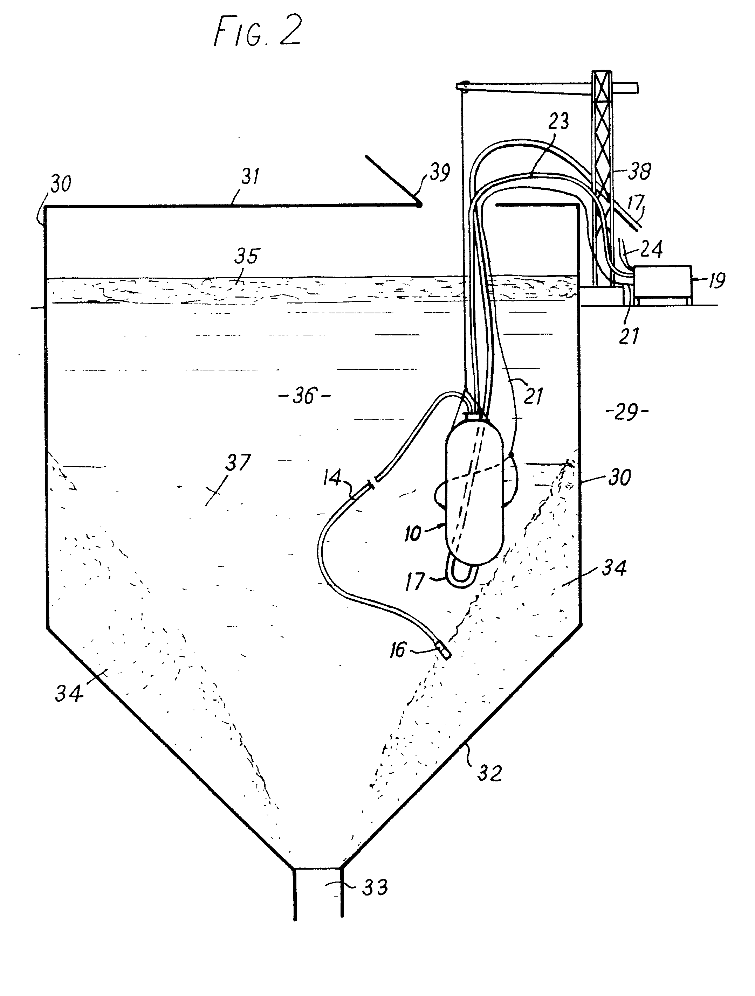

The use of the apparatus will now be described with reference to Figure 2. The digestion tank illustrated in Figure 2 is of conventional form, largely embedded in the ground 29 or in a bank, and comprises a cylindrical casing 30 having a top closure 31 and a conical lower end section 32 which terminates in a base opening 33. As is usual with installations of this kind, the effective capacity of the digestion tank is reduced after a period of time, due to the accumulation of compacted grit in the lower region of the tank and to the formation on the surface of a thick fibrous layer 35 which includes rubbish such as plastic bags and matted hair, which does not readily degenerate. When the tank is drained of its liquid 36 and most of its sludge 37, the layer 35 usually clings to the accumulated grit 34, and the necessary periodic clearing of the tank can be a difficult, unpleasant and dangerous manual task. According to the present invention, however, the task is simplified as the illustrated apparatus can be lowered by means of a small crane 38 through a hatch 39 in the top closure, to rest on the grit 34 which is now coated with the fibrous layer 35, and the contaminating material can be extracted through the recovery hose 14. Only one or possibly two operators are required to enter the tank, for the purpose of positioning the hose 14 and directing the positioning of the chamber 10, and the operator(s) loosen the grit by means of air lances and scrapers; it will also be appreciated that no additional water may be employed in this process.

When the end of the hose 14 is embedded in the material being collected, the tube 16 affords introduction of air so that a conveying air flow through the hose can be maintained. With a relatively high speed air flow, material can be raised through the heights of the order of 100 ft, which is, of course, substantially greater than the head of liquid which could be raised by pure suction.

After the chamber 10 has been filled to the described extent, the material is discharged through the hose 17 to a reception area.

Other applications for the apparatus according to the present invention include extracting filter media such as sand from damaged filter beds, extracting silt from cooling tanks, and handling fine materials such as cement and fly ash. When handling dry fine particulate material such as cement and fly ash, additional dust separation devices may be required before discharging the exhaust air to the atmosphere. Further materials may also be handled, but safety precautions may be required with materials of an explosive nature.

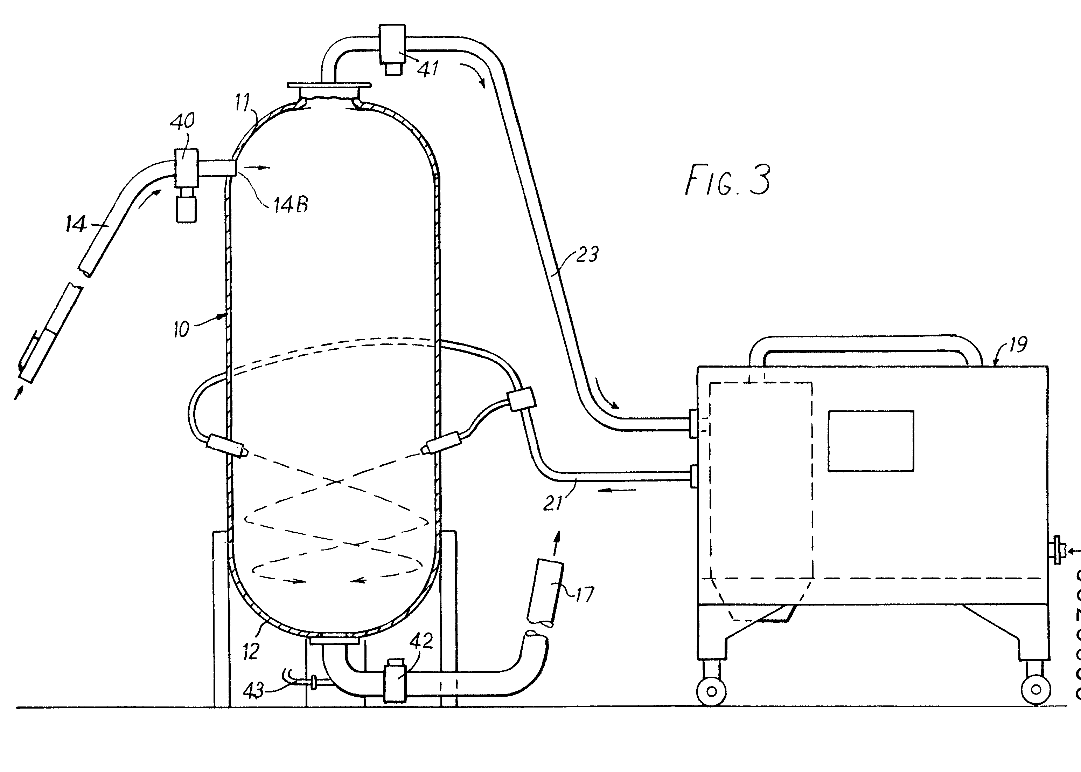

Modifications may be made without departing from the scope of the invention. For example, referring to Figure 3, the recovery hose 14 is provided with a control valve 40 which is pneumatically operated through control pipes (not shown) from the power pack, and the suction pipe 23 is provided with a control valve 41 which is likewise pneumatically operated from the power pack. In this embodiment, material is delivered at 14B into the upper region of the chamber 10, from the hose 14, in a generally tangential direction and it is to be noted that it is usually important to arrange the recovery hose to feed the material centrally and/or in a generally tangential direction into the chamber. The tangential entry of material also facilitates separation of the material from the air flow.

A further modification shown in Figure 3 is the provision of valve 42, again pneumatically controlled from the power pack, in the hose 17 which is intended to deliver upwardly against a head. This valve is closed immediately the delivery operation terminates, to prevent return flow of discharged material into the chamber 10. Also, an air injection nozzle 43 fed from the power pack, may be provided to prevent the blocking of the delivery hose and to minimize the danger of material "arching" over the outlet from the chamber end 12.

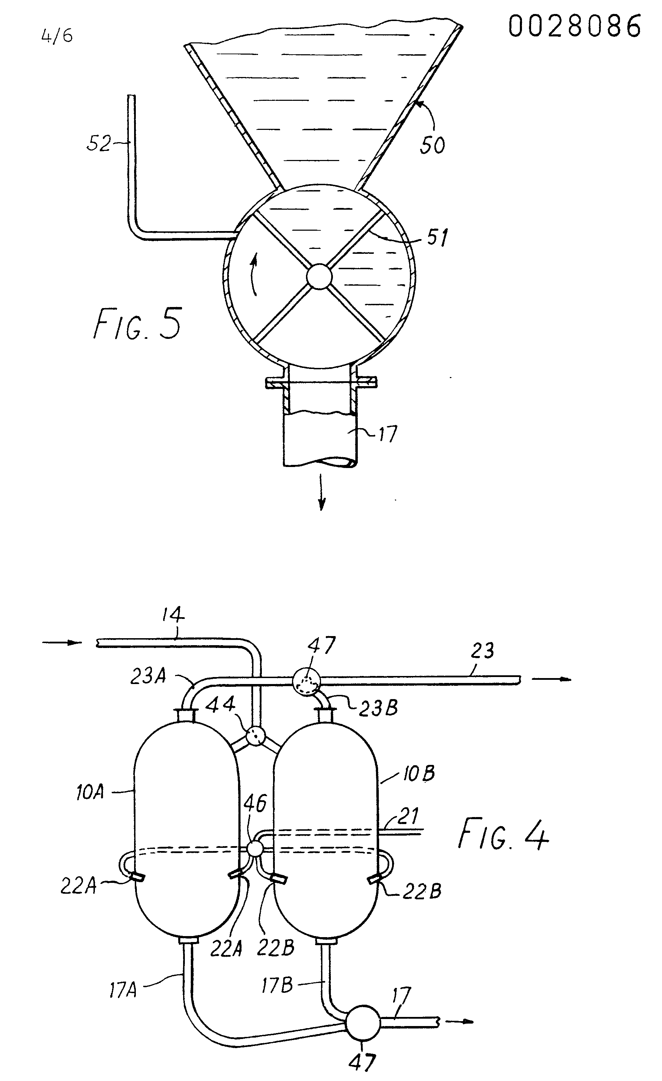

In the embodiments described so far, the apparatus provides batch delivery. However, Figure 4 shows a modification which permits effectively continuous delivery. In this embodiment, twin chambers 10A and 10B are fed by the recovery hose 14 through a diverter valve 44, and the chambers have individual delivery lines 17A, 17B connected to diverter valve 45, individual nozzles 22A, 22B fed by blow line 21 through diverter valve 46, and individual suction pipes 23A, 23B connected to diverter valve 47. The operation of the apparatus shown in Figure 4 is similar to that described above, but alternate filling of the two chambers allows alternate delivery to provide an almost continuous flow.

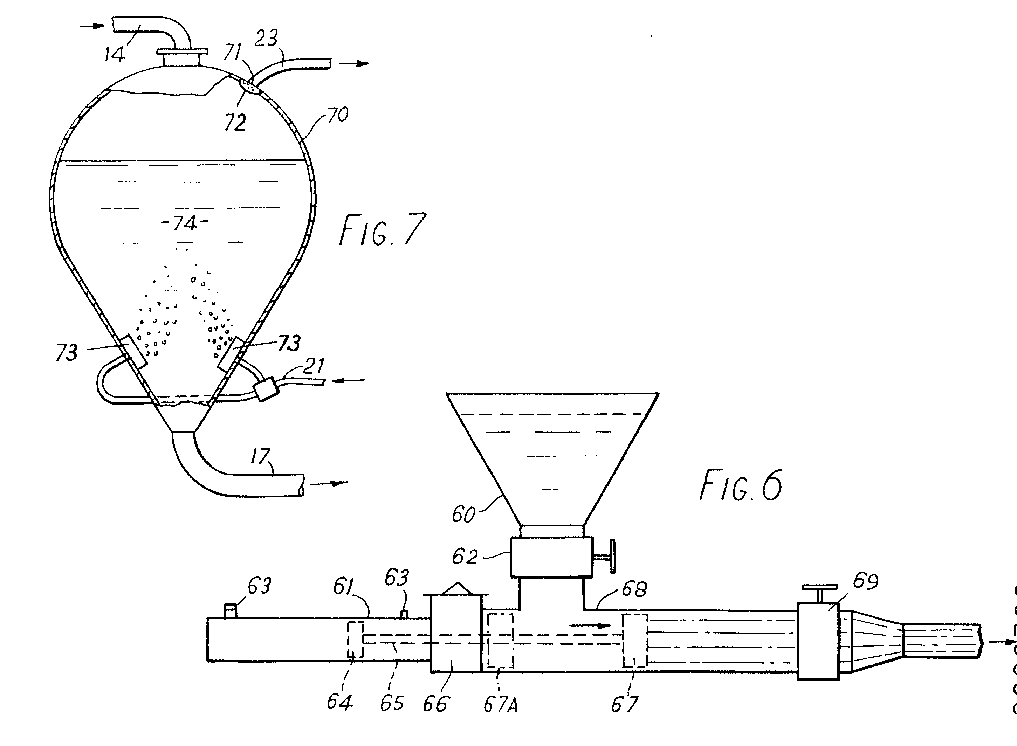

Figure 5 shows a shaped collection and delivery chamber 50 having a rotary outlet valve 51 provided at its bottom end for effectively continuous discharge to the delivery hose 17, as opposed to batch discharge under pressure. The valve 51 is driven at, say, 100 rpm, and the chamber can be maintained at low pressure to effect continuous recovery through hose 11. To promote rapid and complete filling of the four compartments of the valve, a suction line 52 is provided to evacuate the chambers before they open to chamber 50.

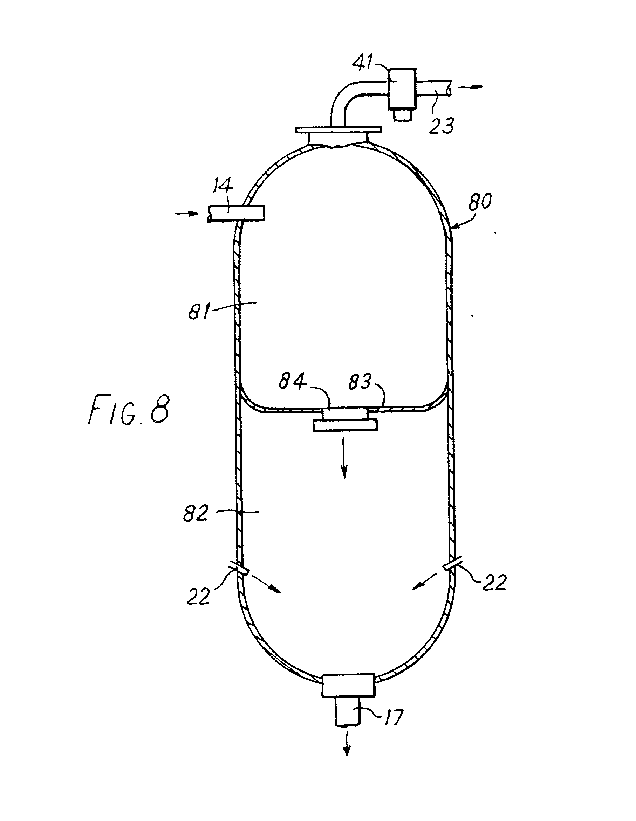

In another modification, the rotary valve 51 is replaced by a reciprocating pump, again for handling suitable materials. One such pump is illustrated in Figure 6 in which a hopper 60, which may be the bottom part of a collection and delivery chamber, feeds to a ram pump 61 through a suction valve 62. The ram pump is hydraulically or pneumatically powered through line connections 63 which operate a double-acting primary piston 64. A piston rod 65 extends from the piston 64, through a waterseal box 66 to a secondary piston 67 which is thus reciprocated by the piston 64. The piston 67 acts to draw material through valve 62 into cylinder 68 after creating vacuum conditions on reaching its extreme left-hand position, 67A, and then drives the material through discharge valve 69 as it moves to the right in the arrowed direction. The valves 61 and 69 are actuated automatically in accordance with the movements of pistons 64 and 67 which may be operated automatically in synchronysm with the filling and emptying of the collection and discharge chamber.

A further alternative to pressurised discharge from the chamber is the employment of a venturi-type pump, for batch discharge.

Referring now to Figure 7, a modified version of the apparatus comprises a shaped collection and discharge chamber 70 having a central collection hose 14, a delivery hose 17, and a suction pipe 23 opening from a port 71 shielded by a filter 72. In this form of chamber, blows line 21 feed compressed air to a pair of perforated plates 73 so that, when the chamber is charged with relatively fine particulate material such as cement powder 74, the contents of the chamber can be fluidised to facilitate batch discharge through delivery hose 17.

Lastly, Figure 8 illustrates a modified form of collection and discharge chamber 80 which is divided into upper and lower compartments 81 and 82 by a partition 83 provided with a central valve-controlled port 84. With this air-lock chamber, a batch of material can be discharged from the lower compartment 82 while the upper compartment 81 is being filled; the port 84 is then opened to dump the material from the upper to the lower compartment, and discharge and filling can proceed again simultaneously.

CLAIMS

1.  A material transporting apparatus, comprising a reception and discharge chamber, a valve-controlled inlet which opens to the upper part of the chamber from a material collector conduit, an outlet which opens from the bottom part of the chamber to a material discharge conduit, valve means to control flow through the discharge conduit, and means for alternately reducing the pressure within the chamber· to draw material into the chamber through said collector conduit and increasing the pressure within the chamber to expel material from the chamber through said discharge conduit.

2.  An apparatus as claimed in Claim 1, in which said means comprises a suction pipe which opens from the upper part of said chamber, and a blow line which is arranged to pressurise the chamber to expel said material.

3.  An apparatus as claimed in Claim 2, in which said blow line feeds nozzles which direct air flows into the chamber in a generally tangential manner to produce a downwardly swirling flow of the contents of the chamber.

4.  An apparatus as claimed in Claim 2 or Claim 3, in which said means includes an air pressure and vacuum source incorporating further means to intercept and collect any material which might be drawn in through said suction pipe.

5.  An apparatus according to any of Claims 2 to 4, in which said valve-controlled inlet includes a plate valve member arranged to control flow through said collector conduit and through said suction line and hinged to deflect and so facilitate entry of material into said chamber.

6.  An apparatus according to any preceding Claim, in which said valve comprises a one-way valve at the
outlet end of the discharge conduit.

7.    An apparatus according to any of Claims 1 to 5,
in which said valve means comprises a non-return
valve located at or near said outlet and operable
to prevent reverse flow of material from said
discharge conduit.

8.    An apparatus according to any preceding Claim,
in which a rotary-chamber valve is provided at the
outlet from said chamber.

9.    An apparatus according to Claim 8, in which
siad rotary-chamber valve has a low pressure connection to expedite filling of the rotary chambers.

10.    An apparatus according to any of Claims 1 to 7, in
which a reciprocating pump is provided to extract material
from said chamber.

11.    An apparatus according to any preceding Claim,
in which means are provided to aerate the contents of
the reception and discharge chamber.

12.    An apparatus according to any preceding Claim,
in which said valve-controlled inlet provides a
substantially central feed to the upper part of the
chamber.

13.    An apparatus according to any preceding Claim,
in which said material collector conduit is provided
at its inlet end with a density control tube to
aerate the in-flowing material through the collector
conduit.

14.    An apparatus according to any preceding Claim,
in which an air jet nozzle is directed into said
discharge conduit to promote steady flow of material
from said outlet.

15.    An apparatus according to any preceding Claim,
and further comprising a second reception and discharge
chamber, the first-mentioned and second chambers being arranged to operate alternately and so provide
effectively continuous collection and discharge.

16. An apparatus according to any of Claims 1 to 14,
in which said chamber comprises an upper and lower
part separated by a valve-controlled part so that
the upper part can be filled and then dumped into
the lower part, and the lower part can then be
discharged while the upper part is being refilled.

17. A material transporting apparatus substantially
as hereinbefore described with reference to any
of the Figures of the accompanying drawings.

18. The features herein described, or their
equivalents, in any novel selection.

0028086

*F/G.1*

10 11 12 13 14 14A 15 16 17 17A 18 19 20 21 22 23 24 -25- 26 27 28

*FIG. 2*

0028086

FIG. 3

52

50

51

*FIG. 5*

17

14

47

23

23A

44

23B

10A

10B

46

21

22A

22B

22A

22B

17A

17B

17

*FIG. 4*

47

FIG. 7

FIG. 6

0028086

FIG. 8

| DOCUMENTS CONSIDERED TO BE RELEVANT | | | CLASSIFICATION OF THE APPLICATION (Int. Cl.-) |
|---|---|---|---|
| Category | Citation of document with indication, where appropriate, of relevant passages | Relevant to claim | |
| X | GB - A - 793 769 (WILHELM HERMANNS) <br> * Whole document * <br><br> -- | 1,2,7, 8,11, 12,17, 18 | B 65 G 53/28 |
| | US - A - 3 424 501 (H. YOUNG) <br> * Column 2, line 40 - column 5, line 70; figures * <br><br> -- | 1,2,6, 7,14, 15,17, 18 | |
| | GB - A - 841 168 (H. SIMON LIM) <br> * Claim 1; figures * <br><br> -- | 8,9, 17,18 | **TECHNICAL FIELDS SEARCHED (Int. Cl.³)** <br><br> B 65 G |
| | US - A - 3 104 782 (I. VON FUNK) <br> * Claim 1; figures * <br><br> -- | 16-18 | |
| | DE - C - 279 242 (E. STRODER) <br> * Page 2, lines 31-64; figures * <br><br> -- | 1,3,14 | |
| | FR - A - 2 055 278 (J. KMIECIK) <br> * Claims 1,2; figures * <br><br> ---- | 3 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 03-02-1981 | VAN ROLLEGHEM |

EPO Form 1503.1  06.78